# EUROPEAN PATENT APPLICATION

(11) **EP 0 827 367 A2**
(43) Date of publication of application: **04.03.1998**
(21) Application number: 97306578.2
(22) Date of filing: 28.08.1997
(51) Int. Cl.: H05B 33/14, C09K 11/06

(54) **Electroluminescent devices**

(30) Priority: 03.09.1996 US 707260
(71) Applicant: XEROX CORPORATION, Rochester New York 14644 (US)
(72) Inventor: Hu, Nan-Xing, Oakville, Ontario (CA); Ong, Beng S., Mississauga, Ontario, L5L 4V9 (CA); Xie, Shuang, Mississauga, Ontario, L5L 5K8 (CA); Popovic, Zoran D., Mississauga, Ontario, L5L 5Z8 (CA); Hor, Ah-Mee, Mississauga, Ontario, L5L 5B1 (CA)
(74) Representative: Pike, Christopher Gerard

(57) **Abstract**

An electroluminescent device comprised of polynuclear arylamines of the formula (I) 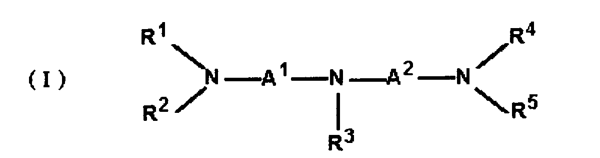 wherein R1, R2, R3, R4, and R5 are aryl groups, and A1 and A2 are biaryl groups. A process for making the polynuclear arylamines of formula (I) is also described.

## Description

This invention is generally directed to electroluminescent (EL) devices, and more specifically, to organic EL devices with enhanced thermal and operational stability, and thus improved durability, and which devices utilize certain polynuclear arylamines as their hole transport components, and which devices can be selected as flat panel displays, or as a component for an image bar device for digital copiers and printers.

From the energy and space usage, and display and flexibility perspectives, particular attention has been devoted to developing energy-efficient flat-panel displays which are capable of providing clear display without restricted viewing angles. Currently, the majority of the flat-panel display devices are based on liquid crystal displays, which technology is, however, beset with the problems of slow response time and restricted viewing angle limitations. The electroluminescence-type display concept appears to offer an ideal solution to resolving some if not all these difficulties. Many EL devices are based on inorganic materials, and these generally require high driving voltages. In contrast, organic EL devices may offer the advantage of lower driving voltages, but their current performance shortfalls, such as short serviceable life and low electroluminescent efficiency, have presented challenging technological hurdles to their practical applications. One of the objectives of the present invention is, therefore, to provide organic EL devices with long serviceable life spans and high electroluminescent efficiency characteristics.

A simple organic EL device can be comprised of a layer of organic luminescent material conductively sandwiched in between an anode, typically comprised of a transparent conductor, such as indium-tin oxide, and a cathode, typically a low work-function metal, such as magnesium, calcium, aluminum, or its alloy with other metals. The device functions, it is believed, on the principle that under an electric field positive charges (holes) and negative charges (electrons) are respectively injected from the anode and cathode into the luminescent layer and undergo recombination to form excitonic states which subsequently emit light. Early organic EL devices have been constructed from a laminate of an organic luminescent material and electrodes of opposite polarity.

While hole transporting materials are generally known to facilitate the hole injection and hole transport processes which lead to improved EL device performance, some critical issues associated with these materials, notably the thermal and operational stabilities of these materials as thin films need to be resolved. For example, prior art arylamine hole injecting and transport layers generally suffer from poor thermal and operational stability arising primarily from crystallization of these amine molecules in the hole injecting and transport thin-film layers.

In view of the complexities and difficulties in utilizing polymeric charge carrier transport components, substantial research efforts have been devoted to developing charge carrier materials, particularly hole transport materials, which can be readily fabricated as thin film charge transport layers by vacuum deposition techniques. Specifically, there has been generated a new class of polynuclear arylamines which possess excellent thermal stability and are readily sublimable or evaporable under high vacuum to form stable thin film hole transport layers. These arylamines can also simultaneously function as both hole injection and hole transport components for EL device applications. Suitable performance-enhancing luminescent additives, such as fluorescent dyes, can be incorporated into the arylamine layer by co-deposition techniques to improve the invention device electroluminescence efficiency and device durability.

It is an object of the present invention to provide EL devices with enhanced thermal stability and operational stability.

In another object of the present invention there are provided improved EL devices which exhibit high electroluminescence efficiency at relatively low operating voltages of, for example, below 20 volts, such as from about 5 to about 19.5 volts.

A further object of the present invention is the provision of polynuclear arylamines as the hole transport component for EL devices, and which amines possess low ionization potentials and from stable amorphous films.

According to one aspect of the present invention there is provided an electroluminescent device comprising a polynuclear arylamine of the formula (I) 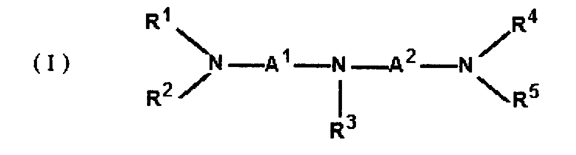 wherein R1, R2, R3, R4, and R5 are aryl groups, and A1 and A2 are biaryl groups.

According to a process aspect of the present invention there is provided a process for the preparation of polynuclear arylamine (I) of claim 1 comprising a condensation of an arylamine intermediate of the formula 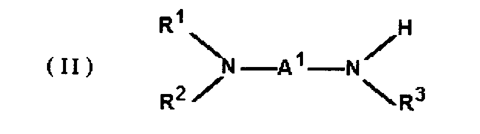 and a biphenyl iodide of the formula 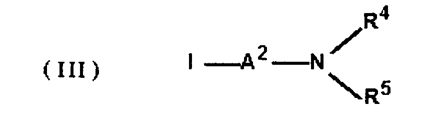 wherein R1, R2, R3, R4 and R5 are aryl groups and A1 and A2 are biaryl groups.

There are provided organic EL devices containing certain polynuclear arylamine hole transport molecules as indicated herein, and which devices possess a number of advantages including improved thermal stability, long device life, high electroluminescence efficiency, and which devices can be readily fabricated using vacuum deposition techniques. The polynuclear arylamines possess superior thermal stability, excellent resistance to decomposition or resistance to structural changes during vacuum evaporation process, and excellent resistance to phase separation and crystallization as thin films. The EL devices utilizing these arylamine hole transport compounds exhibit improved thermal and operational stability, and excellent device durability at temperatures around and above 35°C. In embodiments, the EL devices are comprised of an anode, an organic hole transport component, an electron transport component, and a cathode, and wherein the hole transport component is an evaporated thin film of a polynuclear arylamine as illustrated by the formula (I). In another embodiment, the EL device is comprised of a single active layer of a polynuclear arylamine hole transport component of formula (I), and an electron transport component, and an optional light emitting fluorescent component, sandwiched between an anode and a cathode 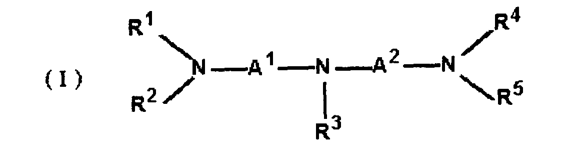 wherein R1, R2, R3, R4, and R5 are aryl groups such as phenyl, tolyl, xylyl, naphthyl, halogen, such as Cl substituted aryl, and the like, and A¹ and A² are biaryl groups such as biphenyl, bitolyl, and the like.

Embodiments of the present invention include an electroluminescent device comprised of polynuclear arylamines of the formula (I) 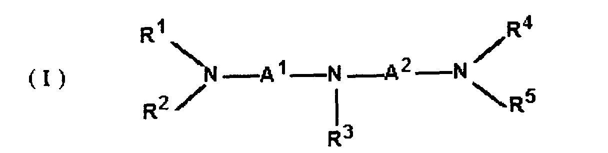 wherein R1, R2, R3, R4, and R5 are aryl groups with from 6 to about 30 carbon atoms, and A1 and A² are biaryl groups with, for example, from about 12 to about 60 carbon atoms; an electroluminescent device comprising in sequence a supporting substrate, an anode, a hole injecting and hole transporting component, comprised of a polynuclear arylamine (I) of the formula (I) 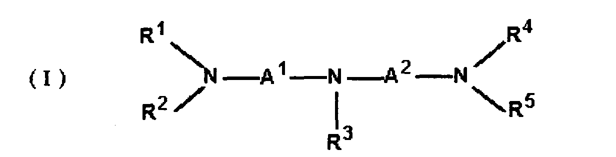 wherein R1, R2, R3, R4, and R5 are aryl, and A1 and A2 are biaryl;an electron injecting and transporting component, and a cathode; and an electroluminescent device comprising a luminescent layer comprised of a hole injecting and hole transporting polynuclear arylamine (I) of the formula 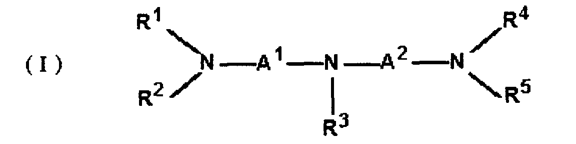 wherein R1, R2, R3, R4, and R5 are aryl, and A1 and A2 are biaryl; and an electron injecting component layer and an electron transporting component layer, and wherein said luminescent layer, said electron injecting component layer, and said transporting component layer are situated between a cathode and an anode.

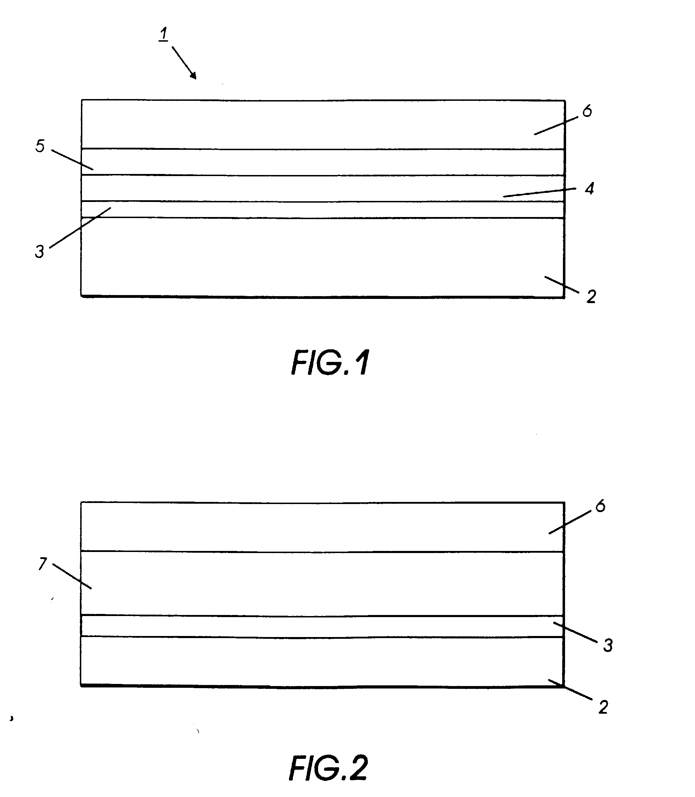

The embodiments of the present invention will be described in more detail with reference to the schematic diagrams of EL devices as depicted in Figures 1 and 2.

Figure 1 illustrates an EL device which comprises an organic light emitting diode 1 comprised of a supporting substrate 2 of, for example, glass, an anode 3, a vacuum deposited organic hole transporting layer 4 comprised of a polynuclear arylamine (I), a vacuum deposited electron transporting layer 5, and in contact therewith a low work function metal as a cathode 6. In the EL device a luminescent zone, in which the electron-hole recombination takes place with subsequent light emission, encompasses the hole transport layer and/or the electron transport layer. Optionally, a fluorescent material, which is capable of emitting light subsequent to electron-hole recombination, may be added to the luminescent zone with the charge transport component functioning as the host material.

Figure 2 illustrates another device configuration of the present invention comprising a single vacuum deposited luminescent layer 7, sandwiched between a cathode 6 and an anode 3 resting on a substrate 2. In embodiments of the present invention, the luminescent layer 7 is comprised of a hole transport component comprised of a polynuclear arylamine (I), an electron transport component, and a light emitting component.

Illustrative examples of supporting substrates include polymeric components, glass and the like, and polyesters like MYLAR®, polycarbonates, polyacrylates, polymethacrylates, polysulfones, quartz, and the like. Other known substrates can be selected provided they are essentially nonfunctional and can support the other layers. The thickness of the substrate can be, for example, from about 25 to about 1,000 microns or more, depending, for example, on the structural demands of the device.

Examples of an anode contiguous to the substrate include positive charge injecting electrodes such as indium tin oxide, tin oxide, gold, platinum, or other materials that will function as an anode, including electrically conductive π-conjugated polymers, such as polyaniline, polypyrrole, and the like, with a work function preferably equal to, or greater than 4 electron volts. The thickness of the anode can range from about 1 to 500nm (10 to 5,000Å) with the preferred range being dictated by the optical constants of the anode material. One preferred range of thickness is from about 10 to about 100nm (100 to about 1,000 Angstroms).

The hole transport layer, such as layer 4, which can function both as a hole injector and a hole transport comprises a thin film of the polynuclear arylamine of formula (I). Examples of polynuclear arylmines that can be selected for the EL devices of the present invention include N,N-bis-[4'-(N-phenyl-N-m-tolylamino)-4-biphenylyl]aniline (1); N,N-bis-[4'-(N-phenyl-N-m-tolylamino)-4-biphenylyl]-m-toluidine (2); N,N-bis-[4'-(N-phenyl-N-m-tolylamino)-4-biphenylyl]-p-toluidine (3); N,N-bis-[4'-(N-phenyl-N-p-tolylamino)-4-biphenylyl]aniline (4); N,N-bis-[4'-(N-phenyl-N-p-tolylamino)-4-biphenylyl]-m-toluidine (5); N,N-bis-[4'-(N-phenyl-N-p-tolylamino)-4-biphenylyl]-p-toluidine (6); N,N-bis-[4'-(N-phenyl-N-p-chlorophenylamino)-4-biphenylyl]-m-toluidine (7); N,N-bis-[4'-(N-phenyl-N-m-chlorophenylamino)-4-biphenylyl]-m-toluidine (8); N,N-bis-[4'-(N-phenyl-N-m-chlorophenylamino)-4-biphenylyl]-p-toluidine (9); N,N-bis-[4'-(N-phenyl-N-m-tolylamino)-4-biphenylyl]-p-chloroaniline (10); N,N-bis-[4'-(N-phenyl-N-p-tolylamino)-4-biphenylyl]-m-chloroaniline (11); and N,N-bis-[4'-(N-phenyl-N-m-tolylamino)-4-biphenylyl]-1-aminonaphthalene (12). 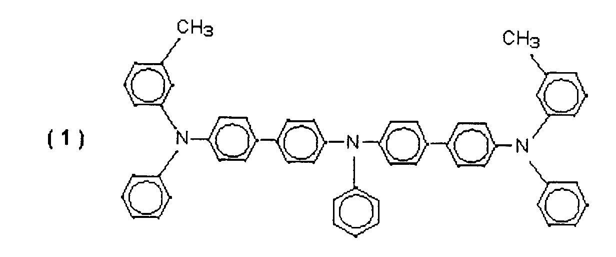 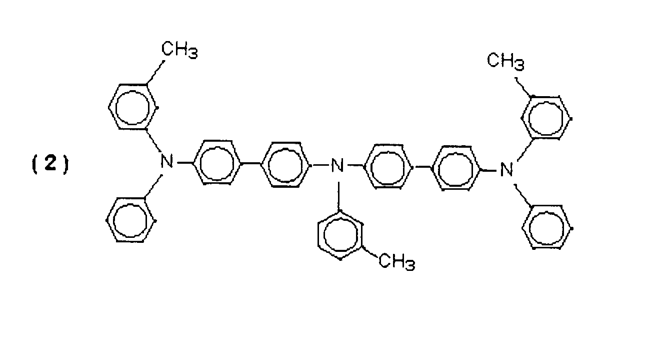 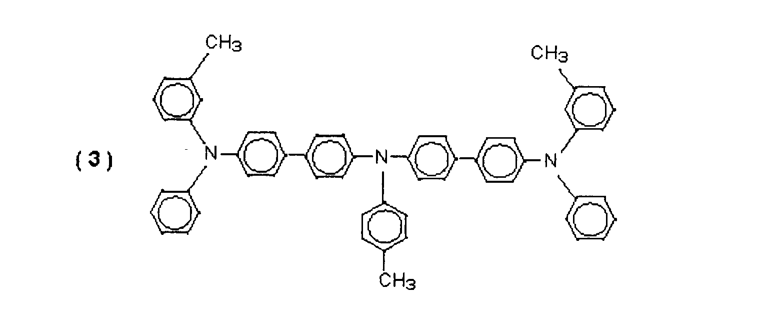 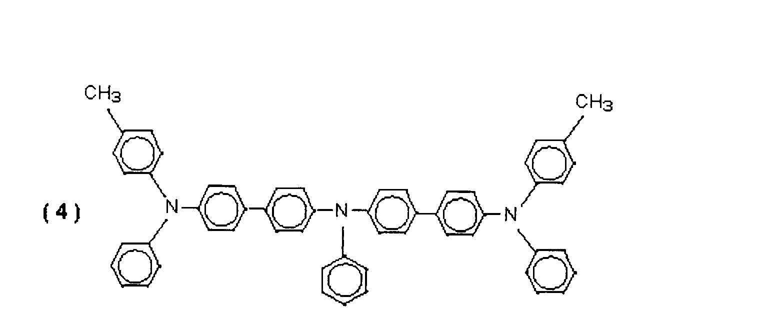 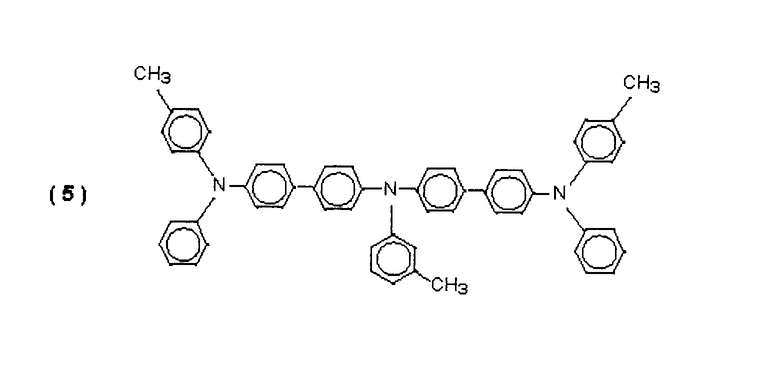 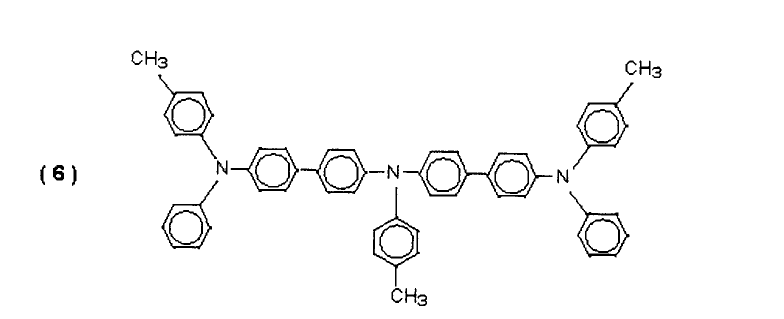 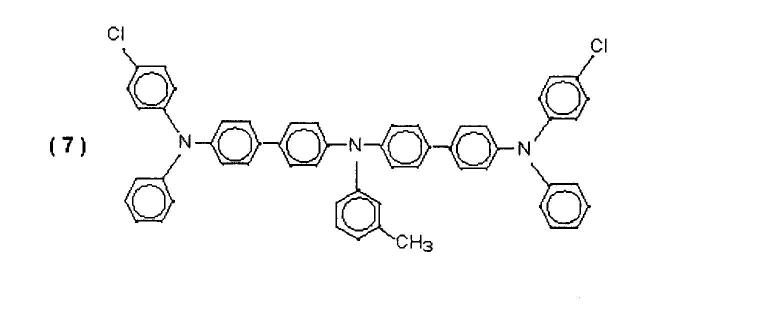 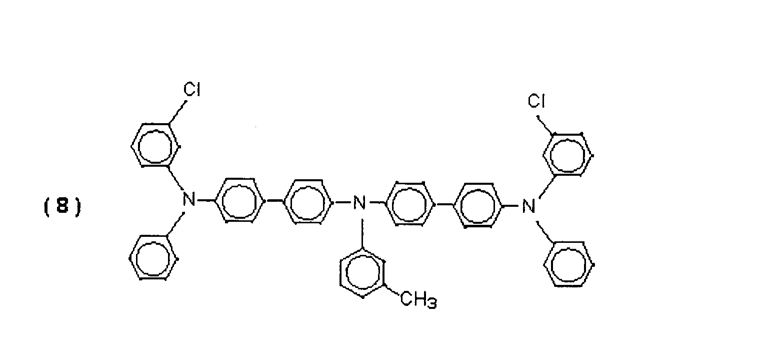 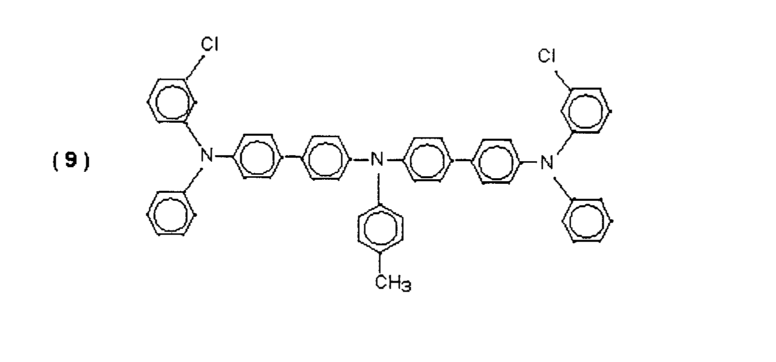 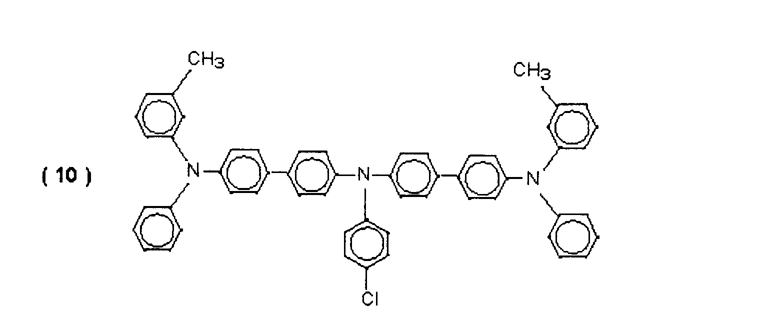 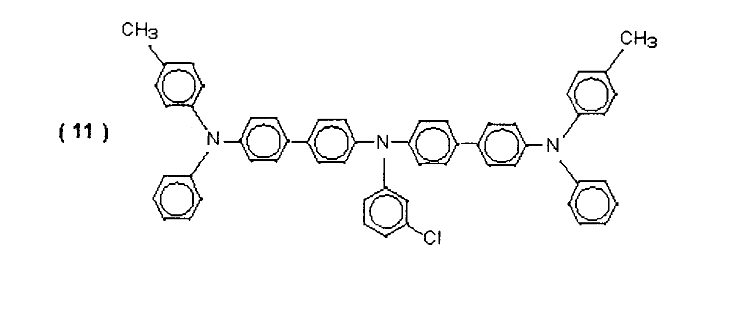 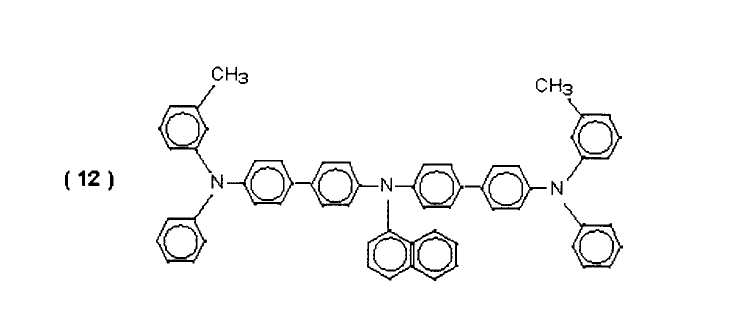 The polynuclear arylamines (1) can be synthesized by the preparative process as illustrated in Reaction Scheme 1. 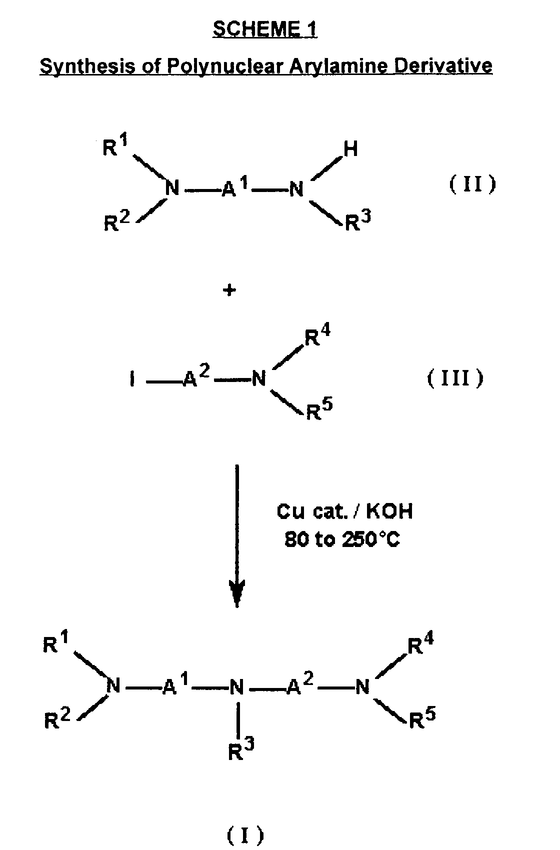 wherein R1, R2, R3, R4, and R5 are as illustrated herein such as aryl groups with, for example, from 6 to about 30 carbon atoms, such as phenyl, tolyl, xylyl, and naphthyl, and A1 and A2 are as illustrated herein such as biaryl groups with, for example, from 12 to about 60 carbon atoms, such as biphenyl, and bitolyl.

In accordance with the process of Scheme 1, polynuclear arylamines (I) are prepared by an Ullmann condensation of arylamine intermediate (II) and biaryl iodide (III). The condensation is generally accomplished in an inert solvent, such as dodecane, tridecane, toluene, xylene, petroleum ethers, and the like, at a temperature ranging from below 100°C to over 250°C, and preferably from 100°C to 190°C. Any type of copper catalysts suitable for Ullmann condensation, including copper powder, cuprous oxide, cuprous chloride, cuprous bromide, cuprous iodide, cupric sulfate and the like, may be employed for the synthesis of the present invention. A suitable molar ratio of the copper catalyst, preferably cuprous oxide, to arylamine intermediate (II) ranges from about 0.01 to about 1. The condensation reaction can be greatly accelerated with a base, such as an alkaline metal hydroxide or carbonate including potassium hydroxide, potassium carbonate, sodium hydroxide, and the like. A suitable molar ratio of the base to arylamine intermediate (II) ranges from about 1 to about 10. The reaction mixture is then cooled to about room temperature, and the product is isolated by known means, for example by filtration and chromatography.

The electron transport layer 5 is comprised of electron transport materials, such as those disclosed in U.S. Patent 4,769,292, reference for example column 6, line 54, to column 9, line 15. Examples of suitable electron transport materials include diarylbutadienes, stilbenes, optical brighteners and metal chelated oxinoid compounds including chelates of oxine. A preferred electron transport material is tris(8-hydroxyquinolinate) aluminum (AlQ3), which may also function as an emitter in the EL devices.

The light emitting fluorescent material is present in an amount of, for example, from about 0.01 to about 10 weight percent, and preferably from about 1 to about 5 weight percent of the host transport layer component. Examples of emitters or fluorescent dyes are illustrated by Tang et al. and include known compounds selected for this purpose, such as coumarin dyes like 7-diethylamino-4-methylcoumarin, 4,6-dimethyl-7-ethylaminocoumarin, 4-methylumbelliferone, and the like, fluorescent 4-dicyanomethylene4H-pyrans, such as 4-(dicyanomethylene)-2-methyl-6-(p-dimethylaminostyryl)4H-pyran and the like, polymethine dyes such as cyanines, merocyanines, complex cyanines and merocyanines, oxonals, hexioxonols, styryls, merostyryls, and streptocyanines. Aromatic compounds such as perylene, rubrene, and anthracene can also be used as emitter materials.

The cathode 6 is conveniently formed by deposition on the upper layer of the electron transport/emitting layer 5. The cathode 6 is of a thickness of, for example, from about 1 to 500nm (10 to 5,000 Å). The cathode 6 can be comprised of any metal including any low work function metal useful for this purpose. The cathode can also be formed from a combination of a low work function metal and at least one other metal. A low work function metal is a metal having a work function of less than 4 eV. The lower the work function of the metal, the lower the voltage required for electron injection into layer 5 or 7.

Suitable low work function cathode metals include metals of Group 2A or alkaline earth metals, and Group III metals including rare earth metals and the actinide groups metals. Alkaline earth metals are preferred because of their ready availability, low cost, ease of handling and minimal adverse environmental impact. Magnesium and calcium are particularly preferred. Low work function metals exhibiting work functions in the range of 3.0 to 4.0 eV are usually more stable than metals exhibiting lower work functions and are, therefore, preferred.

The cathode 6 may include a second metal for the purpose of increasing stability both during storage and operation. The second metal can be selected from any metal other than alkaline metal. The second metal itself can be a low work function metal and suitable examples of the second metal include the examples of metals for the first metal having a work function of less than about 4 eV.

As an alternative, the second metal can be selected from various metals having a work function greater than 4 eV. This group includes elements more resistant to oxidation and, therefore, more commonly fabricated as metallic elements. The second metal contributes to the stability of cathode 6.

Suitable metals having a work function of 4 eV or greater include aluminum, the Group IB metals, metals in Groups IV, V and VI and the Group VIII transition metals, particularly noble metals. Aluminum, copper, silver, gold, tin, led, bismuth, tellurium and antimony are particularly preferred high work function second metals for incorporation into cathode 6.

A primary function of the second metal is to stabilize the first low work function metal. A second function is to reduce sheet resistance of the cathode 6 as a function of the thickness of the cathode. This results in a very stable, thin cathode 6 of acceptably low resistance and high electron injection efficiency. A third function of the second metal is to facilitate vacuum vapor deposition of the first metal. Suitable proportions of second metal are in the range of 1 percent to 99 percent of the total metal content component of cathode 6.

Both anode 3 and cathode 6 of the organic EL device can be of any convenient form. A thin conductive layer can be coated onto a light transmissive substrate, for example a transparent or substantially transparent glass plate or plastic film. The EL device can include a light transmissive anode 3 formed of tin oxide or indium tin oxide coated on a glass plate. Also, very thin light-transparent metallic anodes can be used, such as gold, and the like. In addition, transparent or semitransparent thin layers of π-conjugated polymers, such as polyaniline, polypyrrole, and the like, can be used as anodes. Any light transmissive polymeric film can be employed as the substrate.

Additionally in embodiments, the present invention is directed to organic layered EL devices comprised of a supporting substrate as illustrated herein, such as glass, a semitransparent layer of, for example, indium or tin oxide, an active single layer comprised of a polynuclear arylamine as illustrated herein, an emitter compound, an electron transport compound, and a low work function electrode as the top layer.

### EXAMPLE I

### Synthesis of N.N-bis-[4'-(N-phenyl-N-m-tolylamino)-4-biphenylyl]-m-toluidine (2)

**4-Bromo-4'-iodobiphenyl:** In a 2 liter three-necked flask fitted with a water condenser, a mechanical stirrer, and a thermometer, was placed a mixture of acetic acid (800 milliliters), 4-bromobiphenyl (107.0 grams, 0.46 mol), iodine (50.76 grams, 0.20 mol), acid (22.8 grams, 0.1 mol), concentrated sulfuric acid (26.0 milliliters), and water (54.0 milliliters). The mixture was heated to 90°C, and stirred for 3.0 hours at this temperature. The reaction was quenched by pouring the reaction mixture into 800 milliliters of ice water with vigorous stirring. The precipitate was collected by filtration, washed with water and methanol, and dried in a vacuum oven. The solid was recrystallized from toluene to provide 139.0 grams of 4-bromo-4'-iodobiphenyl as colorless needles.

**4'-(N-phenyl-N-m-tolyl)amino-4-bromobiphenyl:** In a 500 milliliter three-necked flask equipped with a mechanical stirrer, thermometer, and a water condenser with a nitrogen gas inlet, was placed the above prepared 4-bromo-4'-iodobiphenyl (107.5 grams, 0.3 mol), 3-methyldiphenylamine (82.6 grams, 0.45 mol), potassium hydroxide (70.1 grams, 1.25 mol), copper (I) oxide (10.7 grams, 0.075 mmol), and ISOPAR M™ (50 milliliters). The mixture was heated to 160°C, and stirred vigorously for 6 hours at this temperature. The reaction mixture was allowed to cool to 120°C, and toluene (200 milliliters) was added with stirring. After the mixture was further cooled to room temperature, the toluene layer was separated, and treated with alumina at reflux for 1.0 hour. The alumina was filtered off and the filtrate was reduced in volume by evaporation until crystallization started. The contents were placed in a cold room overnight, about 18 hours. The product crystals were collected by filtration, and dried in a vacuum. Yield was 105.2 grams, and m.p. was 137 to 138°C

**N,N'-di-m-tolyl-N-phenyl benzidine:** In a 300 milliliter round-bottomed flask fitted with a condenser and a nitrogen-gas inlet, was placed the above prepared 4'-(N-phenyl-N-m-tolyl)amino-4-bromobiphenyl (22.69 grams, 0.055 mol), 3-methylacetanide (9.85 grams, 0.066 mol), potassium carbonate (7.59 grams, 0.055 mol), copper powder (5.0 grams), and tetramethylene sulfone (2.0 milliliters). After stirring at 210°C for 15 hours, the reaction mixture was cooled to 80°C, mixed with ethanol (200 milliliters) and potassium hydroxide (8.4 grams, 0.15 mol), and refluxed for 3 hours. The reaction was quenched by pouring the mixture into water. The precipitate was collected by filtration, washed with water, and dried in a vacuum. The solid was dissolved in toluene, and treated with alumina at reflux for 1 hour. After the alumina was filtered off, the liquid contents was evaporated to remove half of the solvent. The residue was mixed with ethanol, and placed in a cold room overnight, about 18 hours. The product crystals were then collected by filtration. Yield was 19.85 grams, and m.p. was 108 to 110°C.

**4'-(N-Phenyl-N-m-tolyl)amino-4-iodobiphenyl:** In a 500 milliliter round-bottomed flask fitted with a water condenser with a nitrogen-gas inlet, was placed 4'-(N-phenyl-N-m-tolyl)amino-4-bromobiphenyl (20.62 grams, 0.05 mol) and anhydrous diethyl ether (250 milliliters). The flask was cooled with an ice-water bath, and n-butyllithium (2.5 M in hexane, 24.0 milliliters, 0.06 mol) was added slowly. After addition, the reaction mixture was stirred for 10 minutes at this temperature, and then another 30 minutes at room temperature. The reaction mixture was then cooled with an ice bath, and iodine (14.0 grams, 0.055 mol) was added in small portions. After addition, stirring was continued for 20 minutes, and the reaction was quenched with aqueous sodium bisulfite. After separation, the organic layer was evaporated to provide a pale yellow precipitate which was collected by filtration, washed with water and methanol, and dried in vacuo. The solid was recrystallized from toluene. Yield was 21.2 grams, and m.p. was 163 to 164°C.

**N,N-bis-[4'-(N-phenyl-N-m-tolylamino)-4-biphenylyl]-m-toluidine (2):** In a 200 milliliter round-bottomed flask was placed the above prepared 4'-(N-phenyl-N-m-tolyl)amino-4-iodobiphenyl (16.15 grams, 0.035 mol), N,N'-di-m-tolyl-N-phenyl benzidine (18.5 grams, 0.042 mol), copper (I) oxide (0.5 grams, 35 mmol), potassium hydroxide (12.75 grams, 0.023 mol) and ISOPAR M™ (10.0 milliliters). The reaction mixture was heated to 160°C and stirred vigorously for 12.0 hours, followed by cooling down to 120°C, subsequent addition of toluene (100 milliliters), and stirring for an additional 20 minutes. After cooling the reaction mixture to room temperature, the toluene phase was separated and mixed with alumina, refluxed for 1.0 hour, and then filtered. The filtrate was evaporated and chromatographed on silica gel with hexane-toluene (10:1) as eluent to afford the crude product which was purified by recrystallization from ethyl acetate. Yield was 20.3 grams, and m.p. was 150.0 to 151.0°C.

¹H-NMR (CDCl₃): δ 2.27 (s, 6H, methyl protons), 2.29 (s, 3H, methyl protons), 6.80 to 7.27 (m, 30H, aromatic protons), 7.40 to 7.47(m, 8H, aromatic protons).

### EXAMPLE II

### Synthesis of N.N-bis-[4'-(N-phenyl-N-m-tolylamino)-4-biphenylyl]aniline (1)

**N,N'-diphenyl-N-m-tolyl-benzidine:** The titled intermediate was prepared in a similar manner in accordance with the preparative procedure of N,N'-di-m-tolyl-N-phenyl benzidine as described in Example I.

**N,N-bis-[4'-(N-phenyl-N-m-tolylamino)-4-biphenylyl]aniline (1):** The titled hole transporting compound was synthesized in accordance with the preparative procedure of N,N-bis-[4'-(N-phenyl-N-m-tolylamino)-4-biphenylyl]-m-toluidine as described in Example I except that N,N'-diphenyl-N-m-tolyl-benzidine was utilized in place of N,N'-di-m-tolyl-N-phenyl benzidine. Yield was 75 percent.

¹H-NMR (CDCl₃): to δ 2.27 (s, 6H, methyl protons), 6.82-7.28 (m, 30H, aromatic protons), 7.41 to 7.48 (m, 8H, aromatic protons).

### EXAMPLE III

### Synthesis of N,N-bis-[4'-(N-phenyl-N-m-tolylamino)-4-biphenylyl]-p-toluidine (3)

**N,N'-di-p-tolyl-N-phenyl benzidine:** The titled intermediate was prepared in a similar manner in accordance with the preparative procedure of N,N'-di-m-tolyl-N-phenyl benzidine as described in Example I.

**N,N-bis-[4'-(N-phenyl-N-m-tolylamino)-4-biphenylyl]-p-toluidine (3):** The titled hole transporting compound was synthesized in accordance with the procedure of N,N-bis-[4'-(N-phenyl-N-m-tolylamino)-4-biphenylyl]-m-toluidine as described in Example I except that N-phenyl-N-m-tolyl-N'-p-tolyl benzidine was utilized in place of N,N'-di-m-tolyl-N-phenyl benzidine. Yield was 79 percent.
¹H-NMR (CDCl₃); δ 2.26 (s, 6H, methyl protons), 2.32 (s, 3H, methyl protons), 6.80 to 7.26 (m, 30H, aromatic protons), 7.40 to 7.45 (m, 8H, aromatic protons).

### EXAMPLE IV

A 50 millimeter x 50 millimeter indium tin oxide coated glass plate (ITO glass) was etched with dilute HCI to form 6 millimeter strips, followed by washing with deionized water and drying in a vacuum oven at 60°C for 1 hour. Immediately before use, the glass was treated with UV ozone for 0.5 hour. The ITO glass was then placed in a vacuum deposition chamber for deposition of the organic layers. The deposition rate and layer thickness were controlled by an Inficon Model IC/5 controller. Under a pressure of less than 5 X 10⁻⁶ torr, the hole transport compound, N,N-bis-[4'-(N-phenyl-N-m-tolylamino)-4-biphenylyl]aniline (1) as obtained in Example II, was first thermally evaporated from an electrically heated tantalum boat at a rate of 0.4 nanometer per second to deposit a 80 nanometers thick layer of (1) on the ITO glass. Subsequently, an electron transport emitter compound, tri(8-hydroxyquinolinate) aluminum, purchased from Aldrich Chemicals, was evaporated in the same manner to form an 80 nanometer layer on top of the hole transport layer. Ten 1 millimeter wide cathodes of Mg:Ag alloy were formed through a patterned mask on top of the organic layers by simultaneous thermal evaporation from two independently controlled tantalum boats containing Mg and Ag, respectively. The typical composition was 5:1 in an atomic ratio of Mg to Ag. A 100 nanometers thick layer of the cathodes was deposited at a total rate of 0.5 nanometer per second. Finally, about 200 nanometers of Ag were overcoated on the Mg:Ag cathode for the primary purpose of protecting the reactive Mg from ambient moisture.

The EL device as prepared above was kept in a dry box which was continuously purged with nitrogen gas. Its performance was assessed by measuring its current-voltage characteristics and light output under a direct current measurement. The current-voltage characteristics were determined with a Keithley Model 238 High Current Source Measure Unit. The ITO electrode was always connected to the positive terminal of the current source. At the same time, the light output from the device was monitored by a silicon photodiode.

The prepared device provided a luminance of 4,400 cd/m² at a DC voltage of 20 volts at 20°C. The device exhibited 10 percent drop in light intensity when the operating temperature was raised from 20°C to 40°C. The operational stability of the device was evaluated at 20°C under a stress condition of a high constant current density of 67 mA/cm². The initial light intensity was 900 cd/m², an intensity level that is well in excess of that required for many practical applications. The light intensity decreased slowly over time, and a 70 percent reduction in light intensity was observed after 100 hours of continuous operation. In addition, the device displayed no changes in the current-light intensity characteristics even after it was subjected to a temperature of 40°C for 72 hours.

### COMPARATIVE EXAMPLE

A comparative EL device was fabricated in accordance with the procedure of Example IV except that a known hole transport compound, N,N'-diphenyl-N,N'-bis(3-methylphenyl)1,1'-biphenyl-4,4'-diamine was utilized in place of N,N-bis-[4'-(N-phenyl-N-m-tolylamino)-4-biphenylyl]-aniline (1).

This comparative device provided a luminance of 4,700 cd/m² at a DC voltage of 20 volts. However, the device exhibited over a 30 percent drop in light intensity when the operating temperature was raised from 20°C to 40°C. Under a constant current density of 67 mA/cm², the present device afforded an initial light intensity of 910 cd/m², however, the light intensity decreased rapidly, and a 70 percent reduction was registered after only 45 hours of continuous operation. Furthermore, the degradation in light intensity became significant after the device had been subjected to a temperature of 40°C for 72 hours.

### EXAMPLE V

An EL device was fabricated in accordance with the procedure of Example IV except that N,N-bis-[4'-(N-phenyl-N-m-tolylamino)-4-biphenylyl]-m-toluidine (2) was utilized in place of N,N-bis-[4'-(N-phenyl-N-m-tolylamino)-4-biphenylyl]aniline (1).

The prepared device provided a luminance of 4,150 cd/m² at a DC voltage of 20 volts at 20°C. The device exhibited 15 percent drop in light intensity when the operating temperature was raised from 20°C to 40°C. Under a constant current density of 67 mA/cm², the present device afforded an initial light intensity of about 895 cd/m², and the light intensity registered a 70 percent reduction after 84 hours of continuous operation. In addition, the device displayed no changes in the current-light intensity characteristics after it was subjected to a temperature of 40°C for 72 hours.

### EXAMPLE VI

An EL device was fabricated in accordance with the procedure of Example IV except that N,N-bis-[4'-(N-phenyl-N-m-tolylamino)-4-biphenylyl]-p-toluidine (3) was utilized as the hole transport molecule in place of N,N-bis-[4'-(N-phenyl-N-m-tolylamino)-4-biphenylyl]aniline (1).

The prepared device provided a luminance of 4,250 cd/m² at a DC voltage of 20 volts at 20°C. The device exhibited 5 percent drop in light intensity when the operating temperature was raised from 20°C to 40°C. Under a constant current density of 67 mA/cm², the prepared device afforded an initial light intensity of about 950 cd/m², and the light intensity registered a 70 percent reduction after 110 hours of continuous operation. Furthermore, the device displayed no changes in the current-light intensity characteristics even after it was subjected to a temperature of 40°C for 72 hours.

## Claims

1. An electroluminescent device comprising a polynuclear arylamine of the formula (I) 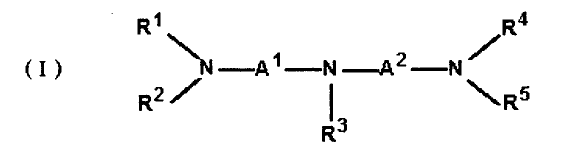 wherein R1, R2, R3, R4, and R5 are aryl groups, and A1 and A2 are biaryl groups.

2. An electroluminescent device according to claim 1 comprising a supporting substrate, an anode, a hole transporting component comprising a polynuclear arylamine (I) of the formula (I); an electron injecting component, and a cathode.

3. An electroluminescent device according to either of claims 1 or 2 comprising a luminescent layer comprised of a polynuclear arylamine (I) of the formula (I) and an electron injecting component; an anode; and a cathode; wherein said luminescent layer is situated between said cathode and said anode.

4. An electroluminescent device according to any of claims 1 to 3 wherein said polynuclear arylamine is selected from the group consisting of N,N-bis-[4'-(N-phenyl-N-m-tolylamino)-4-biphenylyl]aniline (1), N,N-bis-[4'-(N-phenyl-N-m-tolylamino)-4-biphenylyl]-m-toluidine (2), N,N-bis-[4'-(N-phenyl-N-m-tolylamino)-4-biphenylyl]-p-toluidine (3), N,N-bis-[4'-(N-phenyl-N-p-tolylamino)-4-biphenylyl]aniline (4), N,N-bis-[4'-(N-phenyl-N-p-tolylamino)-4-biphenylyl]-m-toluidine (5), N,N-bis-[4'-(N-phenyl-N-p-tolylamino)-4-biphenylyl]-p-toluidine (6), N,N-bis-[4'-(N-phenyl-N-p-chlorophenylamino)-4-biphenylyl]-m-toluidine (7), N,N-bis-[4'-(N-phenyl-N-m-chlorophenylamino)-4-biphenylyl]-m-toluidine (8), N,N-bis-[4'-(N-phenyl-N-m-chlorophenylamino)-4-biphenylyl]-p-toluidine (9), N,N-bis-[4'-(N-phenyl-N-m-tolylamino)-4-biphenylyl]-p-chloroaniline (10), N,N-bis-[4'-(N-phenyl-N-p-tolylamino)-4-biphenylyl]-m-chloroaniline (11), and N,N-bis-[4'-(N-phenyl-N-m-tolylamino)4-biphenylyl]-1-aminonaphthalene (12).

5. An electroluminescent device according to any of claims 2 to 4 wherein the electron injecting component is selected from the group consisting of diarylbutadiene, stilbene, 2,5-diaryl-1,3,4-oxadiazole and a metal complex of 8-hydroxyquinoline.

6. An electroluminescent device according to any of claims 1 to 5 wherein the anode comprises material selected from the group consisting of indium tin oxide, gold and conductive polymer polyaniline.

7. An electroluminescent device according to any of claims 3 to 6 wherein the anode is of a thickness of from about 10 to about 500 nanometers, the cathode is of a thickness from about 5 nanometers to about 5 micrometers, and the luminescent layer is of a thickness from about 5 nanometers to about 1 micrometer.

8. A process for the preparation of polynuclear arylamine (I) of claim 1 comprising a condensation of an arylamine intermediate of the formula 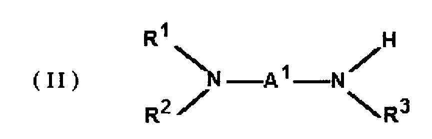 and a biphenyl iodide of the formula 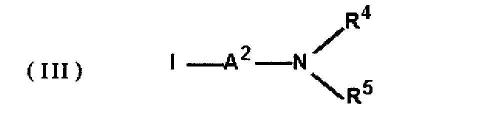 wherein R1, R2, R3, R4 and R5 are aryl groups and A1 and A2 are biaryl groups.

9. A process according to claim 8 wherein said aryl is phenyl, tolyl, xylyl, or naphthyl, and said biaryl is biphenyl, or bitolyl.

10. A process according to either of claims 8 or 9 wherein said Ullmann condensation is accomplished in the presence of a copper catalyst and a base.
